Europäisches Patentamt

European Patent Office

Office européen des brevets

(19)

(11) **EP 0 830 693 B1**

(12) **EUROPÄISCHE PATENTSCHRIFT**

(45) Veröffentlichungstag und Bekanntmachung des Hinweises auf die Patenterteilung:
**27.09.2000   Patentblatt 2000/39**

(21) Anmeldenummer: **96919567.6**

(22) Anmeldetag: **22.05.1996**

(51) Int Cl.⁷: **H01B 12/08**, H01B 7/30

(86) Internationale Anmeldenummer:
**PCT/DE96/00896**

(87) Internationale Veröffentlichungsnummer:
**WO 96/39705 (12.12.1996 Gazette 1996/54)**

(54) **WECHSELSTROMKABEL MIT VERSEILTEN ELEKTRISCHEN LEITERN**

A.C. CABLE WITH STRANDED ELECTRICAL CONDUCTORS

CABLE C.A. AVEC CONDUCTEURS ELECTRIQUES TORONNES

(84) Benannte Vertragsstaaten:
**DE FR GB IT**

(30) Priorität: **06.06.1995   DE 19520589**

(43) Veröffentlichungstag der Anmeldung:
**25.03.1998   Patentblatt 1998/13**

(73) Patentinhaber: **PIRELLI CAVI E SISTEMI S.p.A.**
**20126 Milano (IT)**

(72) Erfinder: **RIES, Günter**
**D-91056 Erlangen (DE)**

(74) Vertreter: **Koch, Thomas, Dr. et al**
**Hoffmann - Eitle**
**Patent- und Rechtsanwälte**
**Arabellastrasse 4**
**81925 München (DE)**

(56) Entgegenhaltungen:
**FR-A- 1 555 807          US-A- 3 163 836**

**Beschreibung**

Die Erfindung bezieht sich auf ein Wechselstromkabel mit mindestens einer Kabelader, die einen zentralen Trägerkörper aufweist, um den in mindestens drei Leiterlagen wendelförmig elektrische Leiter mit vorbestimmten Verseilwinkeln angeordnet sind, wobei die mindestens drei Leiterlagen zur Führung eines Wechselstromes in einer Richtung vorgesehen sind und die Verseilwinkel der Leiter in den einzelnen Leiterlagen derart gewählt sind, daß sie zwischen einem ersten Wert der radial innersten Leiterlage und einem zweiten Wert der radial äußersten Leiterlage stufenweise von Lage zu Lage entweder zunehmen oder abnehmen. Ein derartiges Kabel ist z.B. der US 3,163,836 A zu entnehmen.

Die Entwicklung von Wechselstromkabeln mit elektrischen Leitern, die supraleitende Metalloxidverbindungen als Leitermaterial enthalten, ist gegenwärtig von besonderem Interesse. Solche supraleitende Metalloxidverbindungen mit hohen Sprungtemperaturen $T_c$ von vorzugsweise über 77 K, die deshalb mit flüssigem Stickstoff bei Normaldruck gekühlt werden können, sind allgemein bekannt. Diese Verbindungen werden deshalb auch als Hoch-$T_c$- oder Hochtemperatur-Supraleitermaterialien (Abkürzung: HTSL-Materialien) bezeichnet. Entsprechende Metalloxidverbindungen sind insbesondere Cuprate, beispielsweise auf Basis des Stoffsystems Y-Ba-Cu-O oder (Bi,Pb)-Sr-Ca-Cu-O.

Aus diesen HTSL-Materialien lassen sich Leiter herstellen, mit denen die supraleitenden Kabeladern von Wechselstromkabeln zur Übertragung von elektrischer Energie mit geringen Verlusten und mit kleinen Querschnitten aufgebaut werden können. Gegenüber bekannten normalleitenden Kabeln lassen sich so wirtschaftliche Vorteile erzielen, sofern die Wechselfeldverluste einschließlich eines Energieaufwandes in einer Kühlanlage zu ihrer Abführung kleiner als die Verluste in einem vergleichbaren normalleitenden Kabel sind.

Abschätzungen und Verlustmessungen an Kabelmodellen lassen erwarten, daß dieses Ziel nicht ohne weiteres erreicht werden kann, falls für das vorgesehene Stromtragvermögen Kabeladern mit mehreren Lagen von z.B. bandförmigen HTSL-Elementarleitern benötigt werden. Als Ursache hierfür wurden die verlustbehaftete Flußbewegung des magnetischen Eigenfeldes in und aus dem Supraleiter sowie induzierte Wirbelströme in metallischen Leiterkomponenten erkannt.

Nach einer bekannten, durch Experimente gestützten Verlusttheorie muß das Magnetfeld an der Leiteroberfläche eines Supraleiters möglichst klein gewählt werden. Auf ein Wechselstromkabel angewandt heißt dies aber, daß dann der Durchmesser der Kabeladern so groß zu machen ist, bis der Strom von einer einlagigen Belegung mit einzelnen Supraleitern getragen werden kann. Dies führt aber zu Problemen wie hinsichtlich

- einer geringen Biegbarkeit bzw. großen zulässigen Radien bei Fertigung, Transport und Verlegung,
- eines hohen Volumens an elektrischer Isolation, großer dielektrischer Verluste und großer Kapazität,
- großer Oberfläche einer kryogenen Hülle und erheblicher Wärmeeinströmung in ein Kühlmittel.

Maßnahmen zur Lösung dieser sich bei einer Verwendung von Supraleitern ergebenden Probleme sind jedoch nicht bekannt.

Aus der eingangs genannten US 3,163,836 A ist ein Wechselstromkabel zu entnehmen, das die Merkmale des gattungsbildenden ersten Teils des Hauptanspruchs aufweist. Dabei sollen die Verseilwinkel der aus normalleitendem, metallischem Material erstellten elektrischen Leiter so gewählt sein, daß die effektive Induktanz eine gleichmäßige Verteilung des Hochfrequenzstromes auf die verschiedenen Leiterlagen ermöglicht. Der Verseilwinkel zumindest der ersten Leiterlage kann dabei auch einen negativen Wert annehmen.

Die FR 1.555.807 A offenbart ebenfalls ein Wechselstromkabel mit mindestens einer Kabelader, um deren zentralen Trägerkörper in mindestens drei Leiterlagen wendelförmig Leiter aus metallischem Supraleitermaterial mit vorbestimmten Verseilwinkeln angeordnet sind. Die Verseilwinkel sind dabei so gewählt, daß bei einer Temperaturänderung die Kabellänge infolge einer gleichzeitigen Änderung des Verseilwinkels und des Durchmessers der jeweiligen Leiterlage konstant bleibt.

Der DE 38 11 951 C2 ist ein supraleitendes Wechselstromkabel unter Verwendung von oxidischem Hochtemperatursupraleiter-Material zu entnehmen. Angaben über Verseilwinkel der in mindestens drei Leiterlagen wendelförmig angeordneten Supraleiter sind nicht offenbart.

Aufgabe der vorliegenden Erfindung ist es deshalb, das Wechselstromkabel mit den eingangs genannten Merkmalen dahingehend auszugestalten, daß die vorerwähnten Probleme, insbesondere bei einer Verwendung von Supraleitermaterial, zumindest großenteils nicht auftreten. Ein erfindungsgemäßes Wechselstromkabel soll auch für normalleitende Leiter auszulegen sein.

Diese Aufgabe wird erfindungsgemäß dadurch gelöst, daß die Verseilwinkel der Leiter in den einzelnen Leiterlagen derart gewählt sind, daß folgende mathematische Beziehung zumindest im wesentlichen erfüllt ist:

$$\frac{2\pi R}{l_{j+1}} - \frac{2\pi R}{l_J} = \tan\alpha_{j+1} - \tan\alpha_J = \frac{2\Delta R\sum_{k=1}^{j}\cos\alpha_k}{R\cdot(H_z/J)}$$

mit

$$H_z/J = \sum_{k=1}^{N}\sin\alpha_k \quad.$$

Dabei sind

$l_j$     die Verseilschlaglänge der Leiter der j-ten Leiterlage,
$\alpha_j$     der Verseilwinkel der Leiter der j-ten Leiterlage,
$H_z$     das Axialfeld im Inneren der Kabelader,
j     der Strombelag in jeder Leiterlage,
R     der mittlere Radius der Gesamtheit aller Leiterlagen,
$\Delta R$     die Differenz zwischen den mittleren Radien benachbarter Leiterlagen

und

N    die Anzahl der Leiterlagen der Kabelader.

Bei der Erfindung wird von der Tatsache ausgegangen, daß bei einer Kabelader mit nur einer einzigen Lage aus mit einem Verseilwinkel $\alpha$ verseilten Leitern der Strom I Spiralbahnen folgt und neben einer Axialkomponente $I_z$ = I cos$\alpha$ entlang der Kabeladerachse (in z-Richtung) auch eine azimutale Komponente $I_\varphi$ = I sin$\alpha$ in Umfangsrichtung hat. Eine Einzellage mit Strombelag J erzeugt also zwei Komponenten des Magnetfeldes:

-    Im Außenraum um die Leiterlage (mit Radius r > R) ist das Feld rein azimutal:

$$H_\varphi = J_z R/r = J\cos\alpha\ R/r.$$

-    In dem von der Leiterlage umschlossenen Innenraum (mit Radius r < R) ist das Feld homogen und entlang der Kabelachse z gerichtet:

$$H_z = J_\varphi = J\sin\alpha.$$

Dabei sind hier

$\alpha$     der Verseilwinkel zwischen dem einzelnen Supraleiter und der Kabelachse (in z-Richtung),
R     der Radius der einzigen Leiterlage,
J =     I/($2\pi$R cos$\alpha$) der Strombelag auf der Leiteroberfläche (= der Strom in einem bandförmigen Einzelleiter pro Bandbreite) .

In einer derartigen einlagigen Kabelader werden die Wechselfeldverluste durch die Feldkomponente an der äußeren Oberfläche

$$H_\varphi(R) = J_z = I/(2\pi R)$$

verursacht. Demgegenüber muß bei mehrlagig verseilten Kabeladern die Überlagerung der Feldbeträge der einzelnen Leiterlagen berücksichtigt werden. Hier hat das Summenfeld außen wieder nur eine $\varphi$-Komponente und innen nur eine z-Komponente. In den Zwischenräumen zwischen benachbarten Leiterlagen sind jedoch beide Feldkomponenten vorhanden.

Es wurde nun erkannt, daß sich die auf diese beiden Feldkomponenten in den Zwischenräumen zurückzuführenden Wechselfeldverluste mit dem erfindungsgemäßen Verseilkonzept für die mehrlagige Kabelader des Wechselstromkabels zumindest weitgehend verhindern lassen, indem nunmehr kein magnetischer Fluß über den Leiter von außen in die zwischen den einzelnen Lagen vorhandenen Zwischenräume wandert. Dadurch entfallen vorteilhaft auch die damit verbundenen, verhältnismäßig hohen Verluste. Diese Überlegungen gelten sowohl für supraleitende Leiter, insbesondere mit HTSL-Material, als auch für normalleitende Leiter.

Vorteilhafte Ausgestaltungen des erfindungsgemäßen Wechselstromkabels gehen aus den abhängigen Ansprüchen hervor.

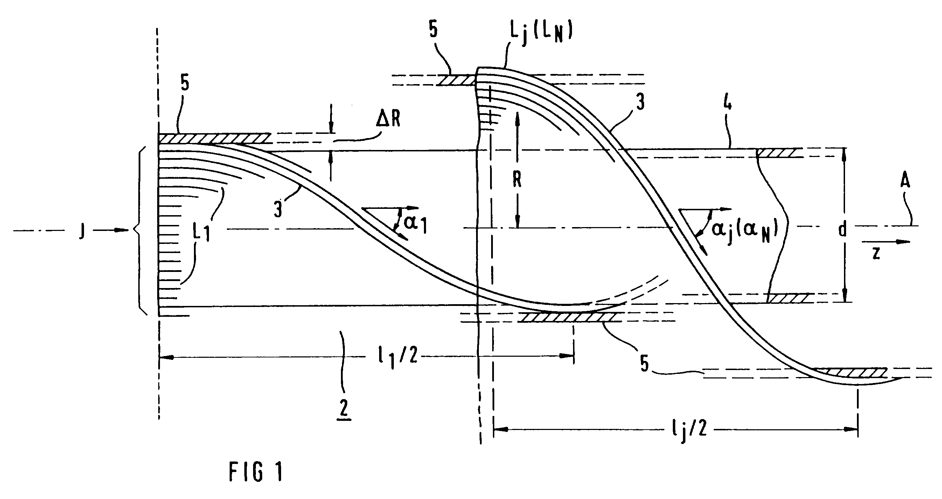

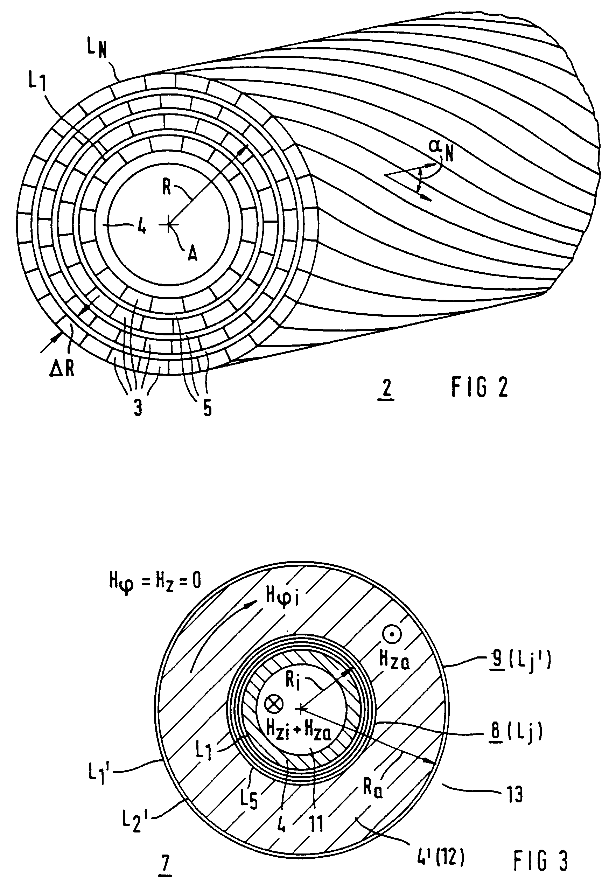

Zur weiteren Erläuterung der Erfindung wird nachfolgend auf die Zeichnung Bezug genommen. Dabei zeigen jeweils schematisch

deren Figuren 1 und 2       einen Querschnitt bzw. eine Schrägansicht eines Ausschnittes aus der Verseilung einer einzelnen Kabelader,

deren Figur 3       einen Querschnitt durch ein Kabel mit konzentrischem Hin- und Rückleiter

und

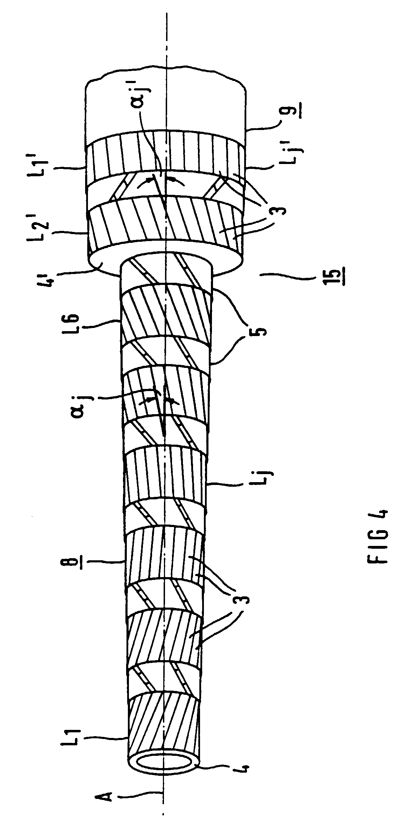

deren Figur 4       eine Schrägansicht dieses Kabels.

In den Figuren sind sich entsprechende Teile mit denselben Bezugszeichen versehen.

In den Figuren 1 und 2 ist eine Kabelader 2 eines erfindungsgemäßen Wechselstromkabels mit einer ersten Lage $L_1$ von einzelnen, vorzugsweise unmittelbar nebeneinanderliegenden Leitern 3 auf einem vorzugsweise voll- oder hohlzylindrischen, eine Längsachse A umschließenden Trägerkörper 4 angedeutet. Die Achse A weist in Richtung einer z-Koordinate. Als Leitermaterial sei für das Ausführungsbeispiel ein Supraleitermaterial mit hoher Sprungtemperatur $T_c$ von insbesondere über 77 K gewählt. Die draht- oder bandförmigen Supraleiter 3 enthalten somit ein HTSL-Material wie beispielsweise $(Bi,Pb)_2Sr_2Ca_2Cu_3O_x$, das in einer normalleitenden Matrix vorzugsweise aus Ag oder einer Ag-Legierung eingebettet sein kann. Das HTSL-Material kann auch in Form einer Schicht auf einem normalleitenden Träger aufgebracht sein. Die Supraleiter können als Einkernleiter oder Mehrkernleiter (= Multifilamentleiter) ausgebildet sein, wobei sie eine runde oder vorzugsweise eine flache Querschnittsform besitzen. Beispielsweise kann ein HTSL-Multifilament-Flachdraht mit mindestens 19 Filamenten von etwa elliptischem Querschnitt in einer Matrix aus Silber vorgesehen sein. Ein Ag-haltiges Matrixmaterial kann auch legiert sein mit 0,1 bis 4 % Wismut, Blei, Antimon, Aluminium oder Zinn, wobei es einen spezifischen elektrischen Widerstand von wenigstens $10^{-6}$ Ω·cm bei 77 K aufweisen soll. Ein entsprechender Mehrkernleiter kann verdrillte Leiterkerne (Filamente) mit einer "Twist"-Länge zwischen 1 und 10 cm aufweisen. Bei bandförmigen Supraleitern liegt das Verhältnis von Breite zu Dicke vorzugsweise zwischen 10: 1 und 50:1.

In der radial innersten Leiterlage $L_1$ aus einer Vielzahl von nebeneinander verlaufenden, entsprechenden supraleitenden Ein- oder Mehrkernleitern 3 sollen diese Leiter jeweils mit einer vorbestimmten Verseilschlaglänge $l_1$ schrauben- oder wendelförmig angeordnet sein. In Abhängigkeit vom Durchmesser d des Trägerkörpers 4 ergibt sich dann zwischen der Längsrichtung jedes Supraleiters 3 und der Längsrichtung (Achsrichtung z) des Trägerkörpers 4 ein vorbestimmter Verseilwinkel $\alpha_1$.

Um die Lage $L_1$ sind mindestens zwei weitere, in den Figuren 1 und 2 nur angedeutete Lagen $L_j$ aus Supraleitern 3 angeordnet, die vorteilhaft denen der Lage $L_1$ entsprechen. (Für den Index j gilt somit: $1 \leq j \leq N$ mit $N \geq 3$). Dabei kann eine dünne elektrische Isolation 5 zwischen benachbarten Leiterlagen vorgesehen sein. Es ist jedoch auch möglich, daß zwischen diesen Lagen eine dünne elektrisch leitfähige Schicht vorgesehen wird. Diese Schicht kann aus einem schlecht-leitfähigen Material, beispielsweise aus einem Kohlepapier, mit einem Flächenwiderstand zwischen $10^{-2}$ und $10^{-6}$ Ω·cm² bestehen. Erfindungsgemäß sollen für die Supraleiter 3 der weiteren Lage $L_j$ eine vorbestimmte Verseilschlaglänge $l_j$ und somit ein davon abhängiger Verseilwinkel $\alpha_j$ vorgesehen werden. Die konkreten Werte für die Verseilschlaglängen $l_1$ und $l_j$ bzw. für die Verseilwinkel $\alpha_1$ und $\alpha_j$ werden dabei erfindungsgemäß so gewählt, daß sich der Transportstrom des Kabels zumindest annähernd gleichmäßig auf alle Leiterlagen $L_j$ (mit $1 \leq j \leq N$) verteilt. D.h., in einer Kabelader 2 mit N ($\geq 3$) Lagen $L_j$ von Supraleitern 3 soll jede dieser Lagen einen zumindest weitgehend gleichen Strombelag $J_j = J$ aufweisen. Unter dem Strombelag $J_j$ der j-ten Leiterlage $L_j$ wird dabei der Gesamtstrom, bezogen auf den Umfang der jeweiligen Leiterlage $L_j$ und den Cosinus des Verseilwinkels $\alpha_j$ der Leiter in dieser Lage verstanden. D.h., es gilt:

$$J_j = I_{ges}/(2\pi r_j \cdot N \cdot \cos\alpha_j)$$

mit

$I_{ges}$ = Gesamtstrom in der gesamten Kabelader,
$r_j$ = mittlerer Radius der Leiterlage $L_j$.

Dies ist erfindungsgemäß dadurch zu erreichen, daß sich bei einer Betrachtung der Leiterlagen in radialer Richtung der Wert des Verseilwinkels $\alpha_j$ von Lage zu Lage stufenweise ändert, ohne daß ein Vorzeichenwechsel der Winkeländerung $\Delta\alpha_j = \alpha_{j+1} - \alpha_j$ auftritt. D. h., von der innersten zur äußersten Leiterlage hin ändert sich der Verseilwinkel $\alpha_j$ immer nur in einer Richtung. Genau dies ist bei den bekannten Kabelkonzepten nicht der Fall (vgl. z.B. DE 18 14 036 A (= FR 1.555.807 A) oder EP 0 623 937 A). Bei dem erfindungsgemäßen Kabel kann $\alpha_j$ vorzugsweise von einem negativen Wert $\alpha_1$ einer ersten Lage zu einem positiven Wert $\alpha_N$ einer letzten Lage in Stufen $\Delta\alpha_j$ zunehmen oder auch in umgekehrter Richtung von einem positiven Wert $\alpha_1$ zu einem negativen Wert $\alpha_n$ abnehmen.
Die Winkeländerung $\Delta\alpha_j$ zwischen benachbarten Leiterlagen $L_j$ und $L_{j+1}$ braucht dabei nicht immer gleich groß zu sein. Die konkreten Werte für die Größen $l_j$ bzw. $\alpha_j$ für die einzelnen Leiterlagen $L_j$ lassen sich im allgemeinen experimentell ermitteln.

Besonders vorteilhaft ist es, daß bei der in den Figuren 1 und 2 angedeuteten Kabelader 2 mit Stromfluß nur in einer Richtung z (z.B. in Hinrichtung) die Verseilschlaglängen $l_j$ bzw. die Verseilwinkel $\alpha_j$ der einzelnen Leiterlagen $L_j$ zumindest im wesentlichen die folgende mathematische Beziehung erfüllen:

$$\frac{2\pi R}{l_{j+1}} - \frac{2\pi R}{l_j} = \tan\alpha_{j+1} - \tan\alpha_j = \frac{2\Delta R \sum_{k=1}^{j} \cos\alpha_k}{R \cdot (H_z / J)} \quad ,$$

wobei

$$H_z / J = \sum_{k=1}^{N} \sin\alpha_k \quad .$$

Dabei sind

R      der mittlere Radius der Gesamtheit aller Leiterlagen $L_j$,
$H_z/J$      das Axialfeld $H_z$ im Inneren der Kabelader 2 pro Strombelag $J = J_j$,
$\Delta R$      der radiale Abstand zwischen den einzelnen Leiterlagen. Dieser Abstand entspricht der Dicke der Einzelleiter 3 plus der Dicke einer eventuell vorhandenen Lagenisolation 5,
j      der Index der jeweiligen Leiterlage $L_j$ (mit $1 \leq j \leq N$),
N      die Gesamtzahl aller Leiterlagen der Kabelader.

Da im Nenner der vorstehenden Rekursivformel die Größe $H_z/J$ schon alle gesuchten Winkel $\alpha_j$ enthält, muß die vorstehende Gleichung iterativ gelöst werden. Für jeden vorgegebenen Wert $H_z/J$ (in Achsrichtung z) wird so jeweils ein Satz von Winkeln $\{\alpha_j\}$ erhalten. Im allgemeinen läßt sich feststellen, daß bei Kabeladern von erfindungsgemäßen Wechselstromkabeln mit beispielsweise nur einer Stromführungsrichtung die Verseilwinkel $\alpha_j$ radial von innen nach außen betrachtet stufenweise von Lage zu Lage entweder nur zunehmen oder nur abnehmen.

Verseilwinkel $\alpha_j$ für einige Ausführungsbeispiele von vier- und sechslagigen Kabeladern sind in der nachfolgenden Tabelle 1 angegeben. Hierbei ist nur ein Hinleiter betrachtet. Die angegebenen Verseilwinkel würde man aus Gründen der mechanischen Stabilität des gesamten Verbundes der Kabelader wählen. Kleine Winkel von Leiterlagen, beispielsweise der mittleren Leiterlage gemäß dem gewählten Ausführungsbeispiel, bedeuten entsprechend große Verseilschlaglängen, so daß bei der Herstellung der Kabelader dort gegebenenfalls Probleme mit der Fixierung der einzelnen Supraleiter auftreten könnten. Bei einer fertigen Kabelader hat jedoch die äußerste Lage immer die kürzeste Verseilschlaglänge und wird so die weiter innenliegenden Leiterlagen festhalten.

Tabelle 1

| $H_z/J$ | $\alpha_1$ | $\alpha_2$ | $\alpha_3$ | $\alpha_4$ | $\alpha_5$ | $\alpha_6$ |
|---|---|---|---|---|---|---|
| 0.1 | -23 | -13.5 | 8 | 35.6 | | |
| 0.2 | -10 | -5.3 | 6 | 22 | | |
| 0.3 | -17 | -14 | -6.7 | 4.4 | 19 | 35.5 |
| 0.6 | -5 | -3 | 0.7 | 6.4 | 14 | 23 |

Bei den angegebenen Werten in der Tabelle wurde $2\Delta R/R = 0,02$ angesetzt.

Bei dem den Figuren 1 und 2 zugrundegelegten Ausführungsbeispiel wurde davon ausgegangen, daß die Kabelader 2 einen Wechselstrom nur in einer Richtung ihrer Achse A führen soll, so daß sie beispielsweise nur einen Hinleiter darstellt. Es ist folglich noch ein Rückleiter erforderlich. In Wechselstromkabeln, insbesondere für eine Drehstromübertragung, sind im allgemeinen nach außen elektrisch und magnetisch neutrale Kabeladern wünschenswert. Man führt deshalb den Strom jeder Phase auf einem konzentrischen Außenleiter zurück. Dann ist außerhalb jeder Kabelader kein Feld vorhanden. In einem Supraleiterkabel mit Hin- und Rückleiter ist eine entsprechende Anordnung unverzichtbar; andernfalls würden Streufelder der parallelliegenden Phasenleiter zusätzliche Ausgleichströme zwischen den Einzelleitern des Leiterseils induzieren. Die dann unvermeidbaren Wechselfeldkomponenten senkrecht zu den supraleitenden Einzelleitern würden unvertretbar hohe Verluste verursachen. Außerdem entstünden zusätzliche Wirbelstromverluste in einer kryogenen Umhüllung aus metallischem Material.

Figur 3 zeigt schematisch den Querschnitt durch eine entsprechende Wechselstromkabelader 7. Sie enthält einen Innenleiter 8 mit einem mittleren Radius $R_i$ des Wickels aus seinen Leiterlagen $L_j$ und konzentrisch dazu einen Außenleiter 9 mit einem mittleren Radius $R_a$ des Wickels aus seinen Leiterlagen $L_j'$. Der Strombelag in den Leiterlagen des Außenleiters soll dabei entgegengesetzt zu dem in den Leiterlagen des Innenleiters sein, also $-J$ betragen. Entweder der Innenleiter 8 oder der Außenleiter 9 oder alle beide Leiter sollen dabei mindestens drei Leiterlagen aus wendelförmig um in der Figur nur angedeutete Trägerkörper 4 bzw. 4' gewickelten elektrischen Einzelleitern 3 aufweisen. Für jeden dieser Leiter 8 und/oder 9 mit mindestens drei Leiterlagen $L_j$ bzw. $L_j'$ gilt dann die erfindungsgemäße Vorschrift, daß die Verseilwinkel $\alpha$ der Einzelleiter in den einzelnen Leiterlagen derart zu wählen sind, daß sie zwischen einem ersten Wert der radial innersten Leiterlage und einem zweiten Wert der radial äußersten Leiterlage stufenweise von Lage zu Lage entweder zu- oder abnehmen. Da gemäß dem Figur 3 zugrundegelegten Ausführungsbeispiel nur der Innenleiter 8 mindestens drei Leiterlagen, nämlich fünf Leiterlagen $L_1$ bis $L_5$, besitzt, während der Außenleiter 9 aus nur zwei Leiterlagen $L_1'$ und $L_2'$ gebildet wird, gilt hier die erfindungsgemäße Vorschrift selbstverständlich nur für den Innenleiter. D.h., ein erfindungsgemäßes Wechselstromkabel kann einen Innenleiter mit mehr als drei Leiterlagen $L_j$ und einen Außenleiter mit weniger als drei Leiterlagen $L_j'$, beispielsweise mit zwei oder nur einer Leiterlage, aufweisen (oder umgekehrt). Die Leiterlagen $L_j$ des Innenleiters werden dabei radial von innen nach außen gezählt, während die Leiterlagen $L_j'$ des Außenleiters in umgekehrter Richtung gezählt werden. In dem Innenraum 11 des Innenleiters wirkt die Überlagerung der axialen Felder $H_{zi} + H_{za}$ von Innen- und Außenleiter, in dem beispielsweise mit dem Material des Trägerkörpers 4' gefüllten Zwischenraum 12 zwischen Innen- und Außenleiter nur das axiale Feld $H_{za}$ des Außenleiters. Auch herrscht dort noch ein vom Innenleiter erzeugtes azimutales Feld $H_{\varphi i}$. Der Außenraum 13 ist feldfrei ($H_\varphi = H_z = 0$).

Figur 4 zeigt eine entsprechend verseilte Kabelader 15 eines erfindungsgemäßen Wechselstromkabels mit Innenleiter 8 und Außenleiter 9. Der Innenleiter weist sechs auf einem Trägerkörper 4 sich konzentrisch umschließende Leiterlagen $L_j$ ($j = 1 ...6$) auf, die untereinander durch Lagenisolationen 5 beabstandet sind. Ein den Wickel aus den Leiterlagen $L_j$ umschließender weiterer Trägerkörper 4', beispielsweise in Form einer elektrischen Isolation, trägt gemäß dem dargestellten Ausführungsbeispiel nur zwei konzentrische, entsprechend beabstandete Leiterlagen $L_j'$ (mit $j = 1$ und 2) des Außenleiters 9. Wie aus der Figur hervorgeht, weisen alle Leiterlagen des Innen- und Außenleiters jeweils unterschiedliche Verseilwinkel $\alpha_j$ bzw. $\alpha_j'$ auf, wobei unter Berücksichtigung der unterschiedlichen Zählweise für Innen- und Außenleiter jeweils von negativen Winkeln stufenweise zu positiven Winkeln übergegangen wird. Diese Regelmäßigkeit muß jedoch nicht unbedingt immer gegeben sein. Es kann sich auch eine stufenweise Winkeländerung in umgekehrter Richtung ergeben.

Bei einem Kabelkonzept mit konzentrischem Hin- und Rückleiter, wie es den Figuren 3 und 4 zugrundegelegt ist, gilt die vorstehend genannte mathematische Beziehung zur Ermittlung der Verseilwinkel $\alpha_j$ für den Hinleiter exakt nur für den Fall, daß sich der Rückleiter in einer hinreichend großen Entfernung vom Hinleiter befindet, so daß das Magnetfeld des Rückleiters am Ort des Hinleiters auf einen vernachlässigbaren Wert abgesunken ist. Bei dieser Betrachtung kann die Funktion von Hin- und Rückleiter selbstverständlich auch vertauscht sein. Generell läßt sich aber feststellen, daß bei einem erfindungsgemäßen Wechselstromkabel mit konzentrischem Hin- und Rückleiter die Win-keländerung $\Delta\alpha_j$ von Lage $L_j$ zu Lage $L_{j+1}$ immer gleiches Vorzeichen hat. Die Zählweise der Lagen erfolgt dabei, wie anhand der Figuren 3 und 4 erläutert wurde. Außerdem ist festzustellen, daß der Umlaufsinn der Leiter der Lage $L_1$ von Innen- und Außenleiter meistens gleiches Vorzeichen hat, d.h., daß $\alpha_{1i}$ und $\alpha_{1a}$ beide positiv oder negativ sind.

Gemäß den vorstehend erläuterten Ausführungsbeispielen wurde davon ausgegangen, daß es sich bei den elektrischen Leitern der Wechselstromkabel nach der Erfindung um Leiter mit mindestens einer Leiterader aus einem HTSL-Material handeln soll. Die hierfür auszuwählenden Maßnahmen bezüglich der Wahl spezieller Verseilwinkel sind zwar als besonders vorteilhaft für Leiter aus solchen Materialien zu betrachten; die diesen Winkeln zugrundeliegenden Überlegungen gelten jedoch ebenso auch für Leiter mit den sogenannten klassischen Supraleitermaterialien wie NbTi oder $Nb_3Sn$, die eine LHe-Kühltechnik erforderlich machen.

Darüber hinaus sind die erfindungsgemäßen Maßnahmen auch bei Wechselstromkabeln mit normalleitenden Leitern, z.B. aus Cu oder Cu-Legierungen, vorteilhaft anzuwenden. Denn mit diesen Maßnahmen läßt sich in Leitern aus diesen Materialien eine Erhöhung der Wechselstromverluste aufgrund eines Stromverdrängungseffektes (Skineffektes) vermeiden.

Mit der Ersetzung des ursprünglichen Begriffs "annähernd" durch den Ausdruck "im wesentlichen" wird die Anmeldung nicht in der Weise geändert, dass ihr Gegenstand über den Inhalt der Anmeldung in der ursprünglich eingereichten Fassung hinausgeht.

**Patentansprüche**

1. Wechselstromkabel (2) mit mindestens einer Kabelader (7, 15), die einen zentralen Trägerkörper (4, 4') aufweist, um den in mindestens drei Leiterlagen ($L_j$, $L'_j$) wendelförmig elektrische Leiter (3) mit vorbestimmten Verseilwinkeln ($\alpha_j$, $\alpha'_j$) angeordnet sind, wobei

   a) die mindestens drei Leiterlagen ($L_j$, $L'_j$) zur Führung eines Wechselstromes in einer Richtung (z) vorgesehen sind,
   b) die Verseilwinkel ($\alpha_j$, $\alpha_j'$) der Leiter (3) in den einzelnen Leiterlagen ($L_j$, $L'_j$) derart gewählt sind, daß sie zwischen einem ersten Wert ($\alpha_1$) der radial innersten Leiterlage ($L_1$) und einem zweiten Wert ($\alpha_N$) der radial äußersten Leiterlage ($L_N$) stufenweise von Lage zu Lage entweder zunehmen oder abnehmen,

   und
   c) folgende mathematische Beziehung zumindest im wesentlichen erfüllt ist:

   $$\frac{2\pi R}{l_{j+1}} - \frac{2\pi R}{l_j} = \tan\alpha_{j+1} - \tan\alpha_j = \frac{2\Delta R \sum_{k=1}^{j} \cos\alpha_k}{R \cdot (H_z / J)}$$

   mit

   $$H_z / J = \sum_{k=1}^{N} \sin\alpha_k \quad ,$$

   wobei

   $l_j$ die Verseilschlaglänge der Leiter (3) der j-ten Leiterlage ($L_j$),
   $\alpha_j$ der Verseilwinkel der Leiter (3) der j-ten Leiterlage ($L_j$),
   $H_z$ das Axialfeld im Inneren der Kabelader (2),
   $J$ der Strombelag in jeder Leiterlage ($L_j$),
   $R$ der mittlere Radius der Gesamtheit aller Leiterlagen ($L_j$),
   $\Delta R$ die Differenz zwischen den mittleren Radien benachbar ter Leiterlagen

   und

   $N$ die Anzahl der Leiterlagen ($L_j$) der Kabelader (2) sind.

**2.** Kabel nach Anspruch 1, **gekennzeichnet** durch Leiter mit supraleitendem Material.

**3.** Kabel nach Anspruch 2, **gekennzeichnet** durch Leiter (3) mit Hoch-$T_c$-Supraleitermaterial.

**4.** Kabel nach Anspruch 3, **dadurch gekennzeichnet**, daß in den Leitern (3) ihr Hoch-$T_c$-Supraleitermaterial in Form mindestens eines Kerns in einer Matrix aus Ag oder einer Ag-Legierung vorliegt.

**5.** Kabel nach Anspruch 1, **gekennzeichnet** durch Leiter mit normalleitendem Material.

**6.** Kabel nach einem der Ansprüche 1 bis 5, **gekennzeichnet** durch mindestens eine Kabelader (7, 15) mit einem inneren Stromhinleiter (8) und einem darum konzentrisch angeordneten Stromrückleiter (9), wobei wenigstens einer dieser Leiter (8, 9) mindestens drei Leiterlagen ($L_j$ bzw. $L_j'$) aufweist, bei denen die genannte mathematische Beziehung zumindest annähernd erfüllt ist.

**7.** Kabel nach Anspruch 6, **dadurch gekennzeichnet**, daß der innere Stromhinleiter (8) drei Leiterlagen ($L_j$) und der äußere Stromrückleiter (9) zwei Leiterlagen ($L_j'$) aufweist und daß bei beiden Leitern (8, 9) die Winkeländerung von Lage zu Lage jeweils gleiches Vorzeichen hat.

**8.** Kabel nach Anspruch 6 oder 7, **dadurch gekennzeichnet**, daß der Umlaufsinn des elektrischen Leiters (3) der innersten Leiterlage ($L_1$) des inneren Stromhinleiters (8) und der Umlaufsinn des elektrischen Leiters (3) der äußersten Leiterlage ($L_1'$) des äußeren Stromrückleiters (9) gleich sind.

**9.** Kabel nach einem der Ansprüche 1 bis 8, **gekennzeichnet** durch Leiter (3) mit Draht- oder Bandform.

**10.** Kabel nach Anspruch 9, **dadurch gekennzeichnet**, daß das Verhältnis von Breite zu Dicke der bandförmigen Leiter (3) zwischen 10:1 und 50:1 liegt.

**11.** Kabel nach einem der Ansprüche 1 bis 10, **dadurch gekennzeichnet**, daß zwischen benachbarten Leiterlagen ($L_j$, $L_j'$) eine Schicht (5) aus einem isolierenden oder elektrisch leitfähigen Material angeordnet ist.

**Claims**

**1.** AC cable (2) having at least one cable core (7, 15) which has a central support body (4, 4') around which electrical conductors (3) having predetermined lay angles ($\alpha_j$, $\alpha_j'$) are arranged in a helical shape in at least three conductor layers ($L_j$, $L_j'$), wherein

   a) the at least three conductor layers ($L_j$, $L_j'$) are provided for carrying an alternating current in one direction (z),
   b) the lay angles ($\alpha_j$, $\alpha_j'$) of the conductors (3) in the individual conductor layers ($L_j$, $L_j'$) are chosen in such a manner that they either increase or decrease between a first value ($\alpha_1$) for the radially innermost conductor layer ($L_1$) and a second value ($\alpha_N$) for the radially outermost conductor layer ($L_N$) in steps from layer to layer,

   and
   c) the following mathematical relationship is at least essentially satisfied:

$$\frac{2\,\pi R}{l_{j+1}} - \frac{2\,\pi R}{l_j} = \tan\alpha_{j+1} - \tan\alpha_j = \frac{2\,\Delta R\sum_{k=1}^{j}\cos\alpha_k}{R\cdot(H_z\,|\,J)}$$

   where

$$H_z\,|\,J = \sum_{k=1}^{N}\sin\alpha_k\,,$$

where

$l_j$     is the lay length of the conductors (3) in the j-th conductor layer ($L_j$),
$\alpha_j$     is the lay angle of the conductor (3) in the j-th conductor layer ($L_j$),
$H_z$     is the axial field in the interior of the cable core (2),
$J$     is the current carried in each conductor layer ($L_j$),
$R$     is the mean radius of the totality of all the conductor layers ($L_j$),
$\Delta R$   is the difference between the mean radii of adjacent conductor layers

and

$N$   is the number of conductor layers ($L_j$) in the cable core (2).

**2.** Cable according to Claim 1, characterized by conductors made using superconducting material.

**3.** Cable according to Claim 2, characterized by conductors (3) made using high-$T_c$ superconductor material.

**4.** Cable according to Claim 3, characterized in that the high-$T_c$ superconductor material in the conductors (3) is in the form of at least one core in a matrix composed of Ag or an Ag alloy.

**5.** Cable according to Claim 1, characterized by conductors made using normally conductive material.

**6.** Cable according to one of Claims 1 to 5, characterized by at least one cable core (7, 15) having an inner current forward conductor (8) and a current return conductor (9) arranged concentrically around it, wherein at least one of these conductors (8, 9) has at least three conductor layers ($L_j$ or $L_j'$, respectively) in which the said mathematical relationship is at least approximately satisfied.

**7.** Cable according to Claim 6, characterized in that the inner current forward conductor (8) has three conductor layers ($L_j$) and the outer current return conductor (9) has two conductor layers ($L_j'$), and in that the angle change from layer to layer in both conductors (8, 9) in each case has the same mathematical sign.

**8.** Cable according to Claim 6 or 7, characterized in that the rotation sense of the electrical conductor (3) in the innermost conductor layer ($L_1$) of the inner current forward conductor (8) and the rotation sense of the electrical conductor (3) in the outermost conductor layer ($L_1'$) of the outer current return conductor (9) are the same.

**9.** Cable according to one of Claims 1 to 8, characterized by conductors (3) in wire or strip form.

**10.** Cable according to Claim 9, characterized in that the ratio of the width to the thickness of the conductors (3) in the form of strips is between 10:1 and 50:1.

**11.** Cable according to one of Claims 1 to 10, characterized in that a layer (5) composed of an insulating or electrically conductive material is arranged between adjacent conductor layers ($L_j$, $L_j'$).

**Revendications**

**1.** Câble pour courant alternatif (2) avec au moins un brin conducteur (7, 15) qui comprend un corps support (4, 4') central, autour duquel les conducteurs électriques (3) sont disposés en hélice avec des angles de câblage ($\alpha_j$, $\alpha_j'$) prédéterminés en au moins trois couches de conducteurs ($L_j$, $L_j'$),

a) les couches de conducteurs ($L_j$, $L_j'$), au nombre d'au moins trois étant prévues pour conduire le courant alternatif dans une direction (z),
b) les angles de câblage ($\alpha_j$, $\alpha_{j'}$) des conducteurs (3) dans les différentes couches de conducteurs ($L_j$, $L_j'$) étant choisis de telle sorte qu'ils augmentent ou qu'ils diminuent graduellement entre une première valeur ($\alpha_1$) pour la couche de conducteur ($L_1$) située radialement le plus à l'intérieur et seconde valeur ($\alpha_N$) pour la couche de conducteur ($L_N$) située radialement le plus à l'extérieur, et
c) la relation mathématique suivante étant au moins essentielle ment vérifiée

$$\frac{2\pi R}{l_{j+1}} \frac{2\pi R}{l_j} = \tan\alpha_{j+1} - \tan\alpha_j = \frac{2\Delta R \sum_{k=1}^{j}\cos\alpha_k}{R \bullet (H_y / J)}$$

avec

$$H_z / J = \sum_{k=1}^{N}\sin\alpha_k,$$

dans laquelle

$l_j$    représente la longueur du pas des conducteurs (3) de la j$^{\text{ème}}$ couche de conducteur ($L_j$),

$\alpha_j$    l'angle de câblage des conducteurs (3) de la j$^{\text{ème}}$ couche de conducteur ($L_j$),

$H_z$   le champ axial à l'intérieur du brin conducteur (2) intérieur,

J    la charge électrique dans chaque couche de conducteur ($L_j$),

R    le rayon moyen de l'ensemble de toutes les couches de conducteurs ($L_j$),

$\Delta$R   la différence entre le rayon moyen de couches de conducteurs voisines et

N    le nombre des couches de conducteurs ($L_j$) du brin conducteur (2).

2. Câble selon la revendication 1, caractérisé par des conducteurs en matériau supra-conducteur.

3. Câble selon la revendication 2, caractérisé par des conducteurs (3) en matériau supra-conducteur à $T_c$ élevé.

4. Câble selon la revendication 3, caractérisé par le fait que dans les conducteurs (3), le matériau supra-conducteur à $T_c$ élevé est présent sous la forme d'un noyau dans une matrice de Ag ou d'un alliage à base d'Ag.

5. Câble selon la revendication 1, caractérisé par des conducteurs (3) en matériau conducteur normal.

6. Câble selon une des revendications 1 à 5, caractérisé par au moins un brin comprenant un conducteur de départ (8) intérieur et un conducteur de retour (9) disposé concentriquement autour de dernier, au moins l'un desdits conducteurs (8, 9) comprenant au moins trois couches de conducteurs ($L_j$ et $L_{j'}$), dans lesquelles la relation mathématique mentionnée est au moins approximativement vérifiée.

7. Câble selon la revendication 6, caractérisé par le fait que le conducteur de départ (8) intérieur comprend trois couches de conducteurs ($L_j$) et le conducteur de retour (9) extérieur deux couches de conducteurs ($L_{j'}$) et par le fait que dans les deux conducteurs (8, 9) la variation d'angle d'une couche à l'autre présente chaque fois le même signe.

8. Câble selon la revendication 6 ou 7, caractérisé par le fait que les sens d'enroulement du conducteur électrique (3) de la couche de conducteur ($L_1$) la plus à l'intérieur du conducteur de départ (8) intérieur et le sens d'enroulement du conducteur électrique (3) de la couche de conducteur ($L_1$) la plus à l'extérieur du conducteur de retour (9) sont identiques.

9. Câble selon une des revendications 1 ou 8, caractérisé par des conducteurs (3) sous forme de fil ou de bande.

10. Câble selon la revendication 9, caractérisé par le fait que le rapport de la largeur à l'épaisseur des conducteurs (3) en forme de bande est compris entre 10:1 et 50:1.

11. Câble selon une des revendications 1 à 10, caractérisé par le fait qu'une couche (5) en un matériau isolant ou en un matériau électroconducteur est disposée entre des couches de conducteurs ($L_j$, $L_{j'}$).

FIG 1

EP 0 830 693 B1

$L_N$
$L_1$
$R$
$A$
$\alpha_N$
$\Delta R$
3  5
$\underline{2}$  FIG 2

$H\varphi = H_z = 0$
$H\varphi i$
$H_{za}$
$R_i$
$\underline{9}(L_j')$
$\otimes$
$H_{zi} + H_{za}$
$\underline{8}(L_j)$
$L_1$
$L_1'$
$L_5$
$R_a$
13
$L_2'$
4  11
$4'(12)$
$\underline{7}$  FIG 3

FIG 4

EP 0 830 693 B1